# EUROPEAN PATENT APPLICATION

(11) **EP 3 825 902 A1**
(43) Date of publication of application: **26.05.2021**
(21) Application number: 19210534.4
(22) Date of filing: 21.11.2019
(51) Int. Cl.: G06K 9/00

(54) **A TRAINING METHOD AND AN AUTOMATIC SPEED CONTROL SYSTEM FOR A MOTOR VEHICLE**

(71) Applicant: Veoneer Sweden AB, 447 83 Vårgårda (SE)
(72) Inventor: Cronvall, Per, 58332 Linköping (SE); Jagbrant, Gustav, 58646 Linköping (SE); Wernholt, Erik, 58729 Linköping (SE)
(74) Representative: Müller Verweyen

(57) **Abstract**

An automatic speed control system (10) for a motor vehicle comprises an imaging apparatus (12) adapted to capture images (13) from a surrounding of the motor vehicle and a data processing device (14) adapted to perform image processing of images (13) captured by said imaging apparatus (12), and comprising an ACC function (31) adapted to control the speed of the motor vehicle depending on the result of said image processing. A holistic speed estimator (30) based on a machine learned model is implemented in said data processing device (14), which holistic speed estimator (30) is adapted to holistically estimate an appropriate vehicle speed (32) from at least one image (13) captured by said imaging apparatus (12), and said ACC function (31) is adapted to use said holistic speed estimate (32) in said speed control. The machine learning model has been trained to holistically estimate an appropriate vehicle speed from at least one image from a surrounding of a motor vehicle. Training images recorded by an imaging apparatus of a test vehicle driven by a human driver and annotated with a related vehicle speed are used in said training procedure.

## Description

The invention relates to an automatic speed control system for a motor vehicle, comprising an imaging apparatus adapted to capture images from a surrounding of the motor vehicle and a data processing device adapted to perform image processing of images captured by said imaging apparatus, and comprising an ACC function adapted to control the speed of the motor vehicle depending on the result of said image processing. The invention also relates to a training method used in the development of such automatic speed control system.

To safely navigate a motor vehicle in traffic it is paramount to keep a speed appropriate for the current conditions. For most roads there are traffic signs or other regulations specifying the maximum allowed speed. However, a safety concerned human driver will always use his or her common sense to adapt the speed to the surroundings. Examples where the driver decreases the speed include but are not limited to: poor road conditions such as pot holes, gravel, rocks, snow, etc.; bad weather conditions such as heavy rain, snow, fog, etc.; road work areas; areas with occluding objects and/or structures such as other vehicles, hedges, etc.; areas with high risk of children suddenly entering the road, such as residential areas, proximity to schools, etc.; areas with high risk of animal presence; curvy roads.

An autonomous system that does not have this common sense behavior will either be tuned overly cautiously and drive too slowly, with risk of being turned off, or too aggressively and drive too fast thereby risking accidents. Additionally, a system lacking this functionality is likely to be perceived as unsafe, unnerving and unaware of its surroundings, making the driver likely to turn off the system.

Current semi-autonomous vehicles typically focus on the existence of other road users and adapting steering and speed to avoid collisions and dangerous situations, and do not change the desired velocity based on the general surroundings. In contrast to the above, some systems use specific scene information such as road wetness to change the desired velocity. This, however, requires specific solutions for each type of scene information, making it difficult to scale to handle a larger number of and more difficult types of scenarios. Finally, these approaches typically rely on manually labeled data or specific reference sensors.

Somewhat related are End-to-End-Learning systems for autonomous driving that have been suggested in recent years. These systems try to solve the more difficult general sensing and steering problems. However, none of these systems have been demonstrated to work reliably enough to replace more modular and hand-engineered systems. As such they seem unlikely to be employed in a near future.

The problem underlying the present invention is to develop and provide driver assistance system adapted to regulate the vehicle speed to be appropriate for the current driving conditions in an efficient and reliable manner.

The invention solves this object with the features of the independent claims.

According to the invention, a method of training a machine learning model to holistically estimate an appropriate vehicle speed from at least one image from a surrounding of a motor vehicle is provided, wherein training images recorded by an imaging apparatus of a test vehicle driven by a human driver and annotated with a related vehicle speed are used in said training procedure. The inventive approach to solve the problem is to use recorded data of human drivers and train a machine learning model to holistically, directly from the image, predict the suitable speed.

The related vehicle speed may be the speed at or around the time of taking the corresponding training image. However, the related vehicle speed may also be slightly time shifted, up to a few seconds, against the time of taking the corresponding training image, to compensate for the reaction time of the driver and dynamics of the vehicle.

A critical part is how to select and prepare the recorded data for the training. The recorded data should contain the vehicle speed, which can be used as ground truth for any recorded image instance. Preferably, not all data is used to train the machine learning model. The key part to learn is how the overall appearance of the scene relates to the speed. Preferably, training data is removed where the speed of the ego vehicle is directly affected by an explicit object in the scene, or an intentional maneuver by the driver is performed. For example, this may include the reduction of speed to exit the road, reducing the speed in order to keep a distance to a preceding vehicle, parking the vehicle, making a u-turn, etc.

Preferably, the machine learning model is a neural network, in particular a convolutional neural network. A convolutional neural network is trained offline with data recorded from vehicles driven by human drivers. The neural network is trained to predict or estimate the current speed of the vehicle preferably based on a single input image, only, or alternatively on a plurality of input images. However, the machine learning model is not restricted to a convolutional neural network but may be another type of machine learning model such as a Bag-Of-Words model, fully connected neural network, boosting model, SVM, etc.

To filter speed changes due to the explicit intents of the driver, image data is preferably removed from the training data according to one or more of the following rules.

Data from drivers that do not adhere to the traffic rules imposed by e.g. speed signs and stop signs are removed. This could be done automatically using for example an offline traffic sign detector or map data. In other words, images taken when the driver of the test vehicle speed does not adhere to the traffic rules are preferably removed from the training data.

The collected data after the vehicle has just been started and not yet reached an apt speed is removed. In other words, images taken after the test vehicle has just been started are removed from the training data.

If the speed is reduced to zero, it is assumed that this is a parking scenario and the corresponding image data is removed. In other words, images taken when the speed of the test vehicle is reduced to zero are removed from the training data.

If the speed reduction is followed by a significant turn of the test vehicle, the change in speed is assumed to be due to an explicit intent of the driver, such as exiting the road or following a road with a very high curvature. Thus this image data is removed. In other words, images taken when a speed reduction is followed by a significant turn of the test vehicle are removed from the training data.

However, as an exception to this rule, navigational data can preferably be used to determine conditions where said images taken when a speed reduction is followed by a significant turn of the test vehicle are nevertheless kept in (not removed from) said training data. In such embodiments, navigational data from a navigation device, like satellite navigation device, is preferably used to be not as restrictive when excluding sharp turns from the training data. For example, one may choose to include when the driver makes a sharp turn but still follows a road, but still exclude when the driver makes a sharp turn to exit the current road.

A vehicle detector can be run offline and determines if another vehicle is in front of the ego test vehicle. If such a vehicle is found and has a location and speed such that the driver has to slow down, data is removed until there no longer is any close preceding vehicle present. Other object detectors such as pedestrian, animal, and/or debris detectors are run. If an object is found in the path of the ego vehicle forcing the driver to slow down, the data is removed. Summarizing the above, an image processing based object detector is preferably run offline on the training data, and images are removed from the training data when the object detector detects another object in front of the test vehicle. The object detector is preferably adapted to detect one or more of another vehicle, pedestrian, large animal or debris in front of the test vehicle.

In another embodiment, however, training data is not excluded based on detected objects, thus allowing the system to slow down for example in crowded environments.

In other embodiments, a complete traditional ACC-system, potentially based on one or multiple sensors such as camera(s) and/or radar(s), may be run on the entire available dataset. The situations where the ACC system does not perform an explicit action are then used as training data. In other words, a conventional Adaptive Cruise Control system may preferably be run on the training data set, and images are used as training data where the conventional Adaptive Cruise Control system does not perform an explicit action.

Preferably, the machine learning model outputs not only a speed but also a confidence measure of the estimate for every image or series of images. This confidence measure can then be used by the deployed ACC system when combining it with other speed information. In other words, the machine learning model preferably outputs a confidence measure of the appropriate speed estimate. Also, the machine learning model could output a probability distribution of possible recommended speeds, for example in the form of vector valued output.

In a preferred embodiment, the training data is filtered and grouped based on driver characteristics such as cautious, normal, dynamic. This allows one or multiple machine learning models to be trained to output a cautious/normal/dynamic speed recommendation in the deployed system.

The invention also provides for an automatic speed control system for a motor vehicle, comprising an imaging apparatus adapted to capture images from a surrounding of the motor vehicle and a data processing device adapted to perform image processing of images captured by said imaging apparatus, and comprising an ACC function adapted to control the speed of the motor vehicle depending on the result of said image processing, wherein a holistic speed estimator based on a machine learned model is implemented in said data processing device, which holistic speed estimator is adapted to holistically estimate an appropriate vehicle speed from at least one image captured by said imaging apparatus, and said ACC function is adapted to use said holistic speed estimate in said speed control. This part of the invention is called the deployed system, which can be implemented in any commercial motor vehicle. In the deployed system the trained neural network receives a camera image as input for example for each frame, and outputs a predicted speed to be used as a set speed or desired speed. The predicted speed is fed to an ACC system that determines a suitable action.

The ACC may combine the holistic speed estimate with other speed information such as desired user speed, traffic sign speed limitations, etc. In other words, the ACC function is preferably adapted to combine the holistic speed estimate with other speed information. Typically, traffic signs take precedence over the holistic speed estimates, ensuring that the ACC controlled vehicle does not break any speed limits. Additionally, the ACC may use time filtering to get a more robust behavior. In other words, the ACC function is preferably adapted to give an external speed limit precedence over the holistic speed estimate in said speed control. In other words, the automatic speed control system is preferably adapted to apply time filtering on a plurality of holistic speed estimates to obtain a time-filtered holistic speed estimate.

In the following the invention shall be illustrated on the basis of preferred embodiments with reference to the accompanying drawings, wherein:
- Fig. 1: shows a schematic view of an automatic speed control system for a motor vehicle; and
- Fig. 2: shows a scheme for illustrating a speed control procedure performed in the system shown in Figure 1.

The vision-based automatic speed control system 10 is mounted, or to be mounted, in or to a motor vehicle and comprises an imaging apparatus 11 for capturing images of a region surrounding the motor vehicle, for example a region in front of the motor vehicle. The imaging apparatus 11 may be mounted for example behind the vehicle windscreen or windshield, in a vehicle headlight, or in the radiator grille. Preferably the imaging apparatus 11 comprises one or more optical imaging devices 12, in particular cameras, preferably operating in the visible wavelength range, in the infrared wavelength range, or in both visible and infrared wavelength range, where infrared covers near IR with wavelengths below 5 microns and/or far IR with wavelengths beyond 5 microns. In some embodiments the imaging apparatus 11 comprises a plurality of imaging devices 12 in particular forming a stereo imaging apparatus 11. In other embodiments only one imaging device 12 forming a mono imaging apparatus 11 can be used. The imaging devices 12 are preferably fix focus cameras, where the focal length f of the lens objective is constant and cannot be varied.

The imaging apparatus 11 is coupled to an on-board data processing device 14 adapted to process the image data or images 13 received from the imaging apparatus 11. The data processing device 14 is preferably a digital device which is programmed or programmable and preferably comprises a microprocessor, a microcontroller, a digital signal processor (DSP), and/or a microprocessor part in a System-On-Chip (SoC) device, and preferably has access to, or comprises, a digital data memory 25. The data processing device 14 may comprise a dedicated hardware device, like a Field Programmable Gate Array (FPGA), an Application Specific Integrated Circuit (ASIC), a Graphics Processing Unit (GPU) or an FPGA and/or ASIC and/or GPU part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing device 14, or part of its functions, can be realized by a System-On-Chip (SoC) device comprising, for example, FPGA, DSP, ARM, GPU and/or microprocessor functionality. The data processing device 14 and the memory device 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of speed controller 18 (see below) are performed automatically and continuously during driving in real time.

The speed controller 18 is adapted to control the speed of the motor vehicle. The speed controller 18 may be part of the electronic engine control, or part of an electronic control unit separate from the electronic engine control.

The invention is applicable to autonomous driving, where the ego vehicle is an autonomous vehicle adapted to drive partly or fully autonomously or automatically, and driving actions of the driver are partially and/or completely replaced or executed by the ego vehicle.

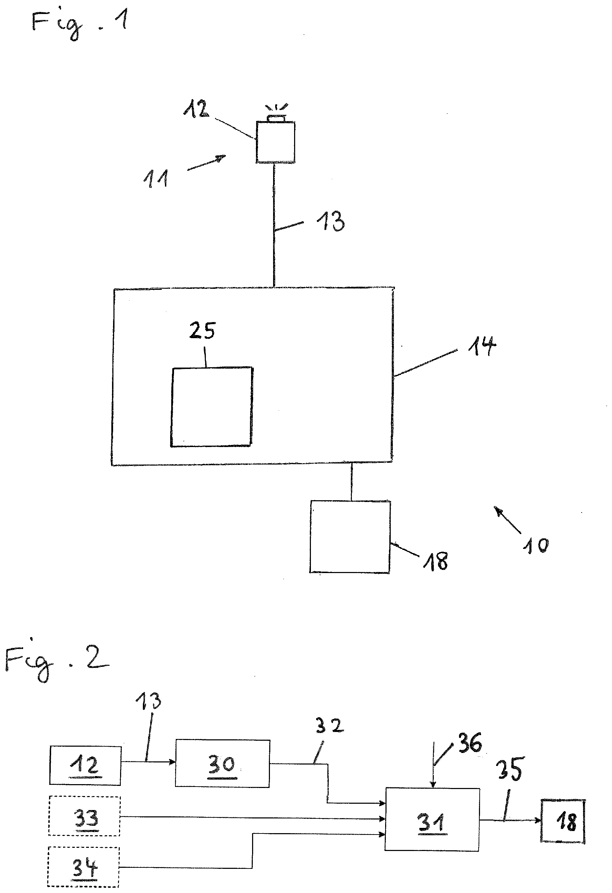

In the following, an automatic speed control method performed during driving by the processing device 14 of Figure 1, i.e. in the deployed system, is explained with reference to Figure 2 .

In the deployed system 10, a trained neural network 30 is implemented in the data processing device 14. The neural network 30 has been trained in a training stage using training data in the form of training images as described in the foregoing. The neural network 30 is adapted to output an appropriate vehicle speed 32 for the motor vehicle for a single input image 13 received from the imaging apparatus. In other words, the neural network 30 receives a camera image 13 as input, for example for every frame or every n-th frame, and outputs a predicted or appropriate or suitable speed.

The suitable speed 32 is fed from the neural network 30 to an Adaptive Cruise Control function 31, or for short ACC function 31, that determines a suitable action. The ACC function 31 is realized by software in the data processing device 14. A suitable action may be to control the vehicle speed via the speed controller 18 towards the appropriate speed 32. Specifically, if the present vehicle speed is higher than the appropriate speed 32, the speed controller 18 may decelerate or brake the motor vehicle on the basis of the signal 35 from the ACC function 31 until the appropriate speed 32 is reached, and to keep the vehicle speed at the appropriate speed until a new appropriate speed is determined. On the other hand, if the present vehicle speed is lower than the appropriate speed 32, the speed controller 18 may accelerate the motor vehicle on the basis of the signal 35 from the ACC function 31 until the appropriate speed 32 is reached, and to keep the vehicle speed at the appropriate speed until a new appropriate speed is determined. The present vehicle speed 36, and other inputs, may be available to the ACC function 14 via the vehicle data bus.

Optionally, the ACC function 31 may combine the holistic speed estimate 32 with other speed information such as a desired user speed 33, external speed limitations 34 for example from traffic sign recognition or a satellite navigation device, etc., which may be available to the ACC function 14 via the vehicle data bus. The desired user speed 33 may be set by a driver using one or more input buttons, for example like in conventional cruise control. Typically, an external speed limit 34 takes precedence over the holistic speed estimate 32, ensuring that the ACC controlled motor vehicle does not break any speed limits. Additionally, the ACC function 31 may use time filtering to get a more robust behavior.

An object detector adapted to detect objects in the surrounding of the motor vehicle by image processing of images 13 captured by the imaging apparatus 11 may be implemented in the data processing device 14. The object detector is adapted to detect or identify, and preferably also to classify, possible objects or obstacles in front of the motor vehicle, such as pedestrians, other vehicles, bicyclists, large animals and/or debris. The ACC function 31 may use the information on detected objects in said vehicle speed control, i.e. the vehicle speed control performed by said ACC function 31 may be depending on detected object information provided by the object detector, as described in the foregoing.

The information 32 provided by the neural network 30 comprises an appropriate vehicle speed, and optionally a corresponding confidence measure, if said neural network has been trained to output such a confidence measure for the vehicle speed estimate. The ACC function 31 may use the confidence measure in said vehicle speed control, i.e. the vehicle speed control performed by said ACC function 31 may be depending on a confidence measure provided by the neural network 30.

The information 32 provided by the neural network 30 to the ACC function 31 may be limited to the appropriate vehicle speed and optionally a confidence measure, meaning that no additional information must be transferred from the neural network 30 to the ACC function 31.

## Claims

1. A method of training a machine learning model to holistically estimate an appropriate vehicle speed from at least one image from a surrounding of a motor vehicle, wherein training images
- recorded by an imaging apparatus of a test vehicle driven by a human driver and
- annotated with a related vehicle speed
are used in said training procedure.

2. The method as claimed in claim 1, **characterized in that** said machine learning model is a neural network, in particular a convolutional neural network.

3. The method as claimed in any one of the preceding claims, **characterized in that** images taken when the driver of the test vehicle speed does not adhere to the traffic rules are removed from the training data.

4. The method as claimed in any one of the preceding claims, **characterized in that** images taken after the test vehicle has just been started and not yet reached an apt speed are removed from the training data.

5. The method as claimed in any one of the preceding claims, **characterized in that** images taken when the speed of the test vehicle is reduced to zero are removed from the training data.

6. The method as claimed in any one of the preceding claims, **characterized in that** images taken when a speed reduction is followed by a significant turn of the test vehicle are removed from the training data.

7. The method as claimed in claim 6, **characterized in that** navigational data are used to determine conditions where said images taken when a speed reduction is followed by a significant turn of the test vehicle are kept in said training data.

8. The method as claimed in any one of the preceding claims, **characterized in that** an object detector is run on said training data, and images are removed from the training data when the object detector detects an object that has a location and speed such that the driver of the test vehicle has to slow down,
wherein preferably said object detector is adapted to detect one or more of another vehicle, pedestrian, large animal or debris in front of the test vehicle.

9. The method as claimed in any one of the preceding claims, **characterized in that** the training data is filtered and grouped based on driver characteristics.

10. The method as claimed in any one of the preceding claims, wherein said machine learning model outputs one or more of
- a confidence measure of the appropriate speed estimate;
- a probability distribution of possible recommended speeds.

11. The method as claimed in any one of the preceding claims, **characterized in that** a conventional Adaptive Cruise Control system is run on the training data set, and using images as training data where said conventional Adaptive Cruise Control system does not perform an explicit action.

12. An automatic speed control system (10) for a motor vehicle, comprising an imaging apparatus (12) adapted to capture images (13) from a surrounding of the motor vehicle and a data processing device (14) adapted to perform image processing of images (13) captured by said imaging apparatus (12), and comprising an ACC function (31) adapted to control the speed of the motor vehicle depending on the result of said image processing, **characterized in that** a holistic speed estimator (30) based on a machine learned model is implemented in said data processing device (14), which holistic speed estimator (30) is adapted to holistically estimate an appropriate vehicle speed (32) from at least one image (13) captured by said imaging apparatus (12), and said ACC function (31) is adapted to use said holistic speed estimate (32) in said speed control.

13. The automatic speed control system as claimed in any one of the preceding claims, **characterized in that** said ACC function (31) is adapted to combine the holistic speed estimate (32) with other speed information (33, 34), for example a desired speed (33) set by a user and/or an external speed limit (34).

14. The automatic speed control system as claimed in claim 13, **characterized in that** said ACC function (31) is adapted to give an external speed limit (34) precedence over the holistic speed estimate (32) in said speed control.

15. The automatic speed control system as claimed in any one of the preceding claims, **characterized in that** said automatic speed control system (10) is adapted to apply time filtering on a plurality of holistic speed estimates (32) to obtain a time-filtered holistic speed estimate.
